# EUROPÄISCHE PATENTSCHRIFT

(11) **EP 0 982 244 B1**
(45) Veröffentlichungstag und Bekanntmachung des Hinweises auf die Patenterteilung: **19.06.2002**
(21) Anmeldenummer: 99116389.0
(22) Anmeldetag: 20.08.1999
(51) Int. Cl.: B65G 17/08

(54) **Scharnierbandkette in geradelaufender Ausführung**
Slat chain of straight type
Chaîne à palettes du type rectiligne

(30) Priorität: 22.08.1998 DE 29815102 U
(43) Veröffentlichungstag der Anmeldung: 01.03.2000
(73) Patentinhaber: Krones AG, D-93063 Neutraubling (DE)
(72) Erfinder: Ternes, Klaus, 93053 Regensburg (DE)

(56) Entgegenhaltungen:
- EP-A- 0 829 434
- DE-U- 29 815 102

## Beschreibung

Die Erfindung betrifft eine aus Kunststoffgliedern bestehende Scharnierbandkette in geradelaufender Ausführung. Die einzelnen Kunststoffglieder besitzen eine biegesteife Tragplatte mit einer im wesentlichen rechteckigen Kontur. An zwei gegenüberliegenden Seiten der Tragplatte befinden sich Gelenkaugen, die so angeordnet sind, dass benachbarte Tragplatten mit einem die Gelenkaugen durchgreifenden Gelenkbolzen schwenkbar verbunden werden können.

Für den Gebindetransport, insbesondere Einweggebinde, wie Kartons, Trays oder dgl., werden in der Getränke- und Verpackungsindustrie derartige Kunststoffscharnierbandketten eingesetzt. Die Scharnierbandketten gibt es mit verschiedenen Breiten der Tragplatten und unterschiedlichen Gelenkausführungen, einem schmalen Scharnier (Gelenkbreite ca. 42 mm) oder einem breiteren Doppelscharnier (Gelenkbreite ca. 135 mm), das höhere Zugkräfte übertragen kann als das Einfachscharnier. Dafür ist bei gleicher Breite der Tragplatten eine geringere Unterstützungsfläche an der Unterseite zur Auflage auf den Gleitleisten des Transportgestells vorhanden. Wegen der verschiedenen Gelenkbreiten der beiden Scharniertypen müssen nachteiligerweise entsprechend angepasste Transporteurunterkonstruktionen vorgesehen werden. Dieser Umstand verursacht in der Fertigung höhere Kosten und hat für den Betreiber einer Transportanlage den Nachteil, dass spätere Umrüstungen auf andere Kettentypen mit einem erheblichen Umbauaufwand verbunden sind.

Demzufolge liegt der Erfindung die Aufgabe zu Grunde, eine Lösung anzugeben, mit der die genannten Nachteile vermieden werden können.

Gelöst wird diese Aufgabe dadurch, dass zum Verbinden der Kunststoffglieder jeweils ein Einfachscharniergelenk verwendet wird, dessen Gesamtbreite (55 bis 60 mm) zwar geringer ist als die des bisher bekannten Doppelgelenks, das aber wegen des neuerungsgemäßen Verhältnisses (17 bis 20) aus der mit dem Gelenkbolzen in Eingriff stehenden Zylinderfläche der Bohrung in dem um den Bolzen schwenkbaren Gelenkauges und der Kreisquerschnittsfläche des Bolzens in Verbindung mit dem geringfügig vergrößerten Bolzendurchmesser (7 bis 9 mm) überraschenderweise trotz der geringeren Fläche zwischen dem Bolzen und dem beweglichen Gelenkauge eine mindestens ebenso hohe Zugkraft übertragen kann, ohne eine zu hohe, vorzeitigen Verschleiß verursachende Flächenpressung im Gelenk in Kauf nehmen zu müssen.

Vorzugsweise ist das neue Einfachscharniergelenk geometrisch und werkstoffseitig so gestaltet, dass sogar eine höhere Zugkraft übertragbar ist, wodurch bei gleichem Gebindegewicht längere Transporteurabschnitte realisierbar sind, d.h. es sind in einer Transportanlage mit einer gegebenen Länge wenigere Antriebe erforderlich. Bevorzugt wird eine Gelenkbreite von annähernd 57mm. Dieses Maß hat den Vorteil, dass es einerseits für breite Ketten mit hoher Traglast noch ausreicht, aber andererseits auch für schmale Ketten mit trotzdem noch ausreichender Auflagefläche an der Unterseite geeignet ist, so dass alle gängigen Breiten der Tragplatten mit einem einheitlichen Gelenk versehen auf einer standardisierten Transporteurunterkonstruktion verwendet werden können.

Weitere vorteilhafte Ausgestaltungen der Erfindung ergeben sich aus den Unteransprüchen.

Nachfolgend wird ein Ausführungsbeispiel anhand der Figuren erläutert. Es zeigt:
- Fig. 1: eine Draufsicht einer Scharnierbandkette,
- Fig. 2: die Unterseite der Scharnierbandkette aus Fig. 1,
- Fig. 3: eine Seitenansicht eines Kettenglieds gemäß Fig.1 und
- Fig. 4: eine Seitenansicht einer Röllchenkettenausführung.

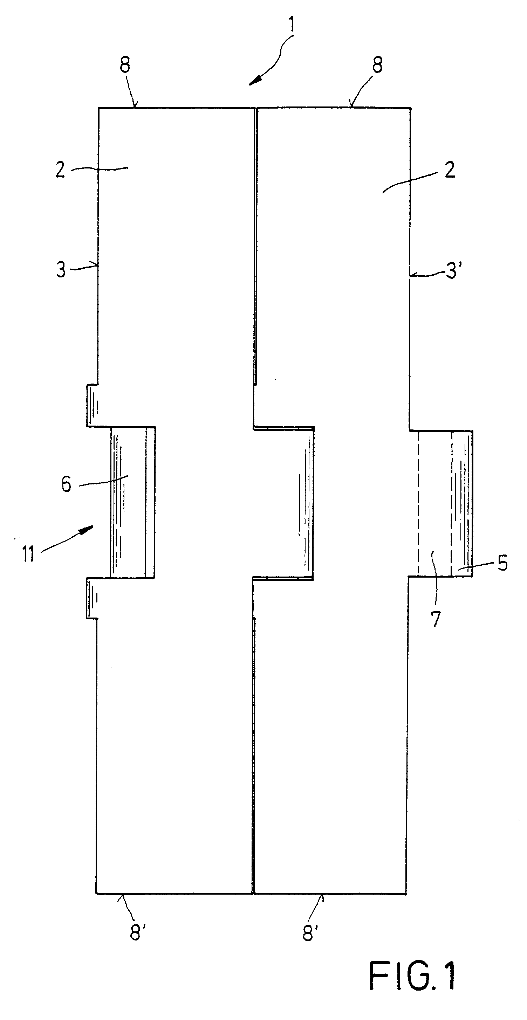

Gemäß der Fig. 1 weist jedes Kettenglied der Scharnierbandkette 1 eine Tragplatte 2 mit paarweise parallelen Seiten 3,3',8,8' und mit einem Seitenverhältnis von größer als 4,8 zu 1 auf, so dass die Tragplatte 2 eine im wesentlichen rechteckige Außenkontur besitzt, wobei die Länge der Seiten 3,3' wenigsten 190 mm und höchstens 305 mm beträgt. Lediglich in der Mitte der Längsseite 3 weist die Tragplatte 2 einen Ausschnitt 11 auf, während an der gegenüberliegenden Längsseite 3', ebenfalls in der Mitte, ein kongruent zum Ausschnitt 11 geformter, nach außen vorspringender Ansatz vorhanden ist, der ein zentrales Gelenkauge 5 bildet und in den Ausschnitt 11 eines benachbarten Kettengliedes einführbar ist.

Im genannten Ausschnitt 11 befindet sich ein metallischer Gelenkbolzen 6 mit einem Durchmesser von 8 mm aus einem vorzugsweise magnetischen oder magnetisierbaren Werkstoff. Dieser Gelenkbolzen 6 durchgreift eine über ihre gesamte Länge einen konstanten Durchmesser aufweisende kreiszylindrische Bohrung 7 im Gelenkauge 5 mit geringem Radialspiel, so dass das Gelenkauge 5 widerstandsarm um den Bolzen 6 schwenkbar ist.

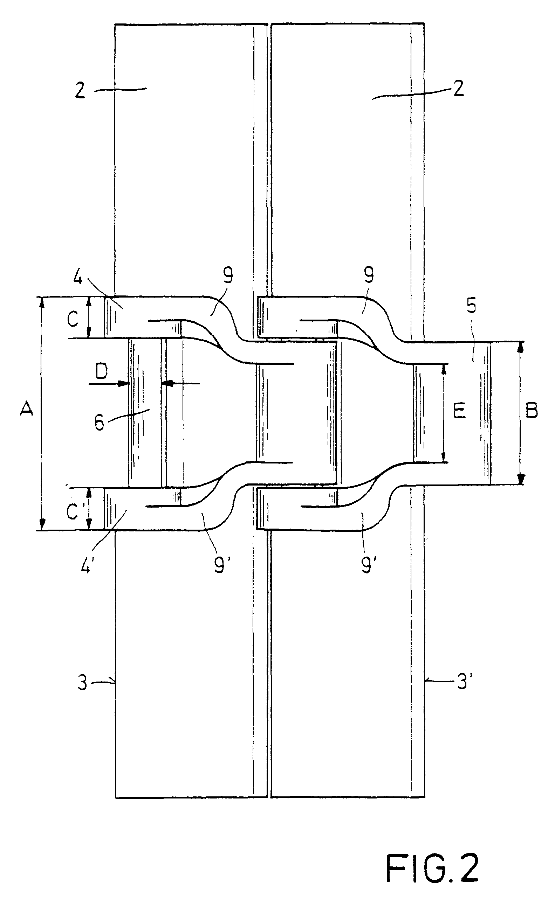

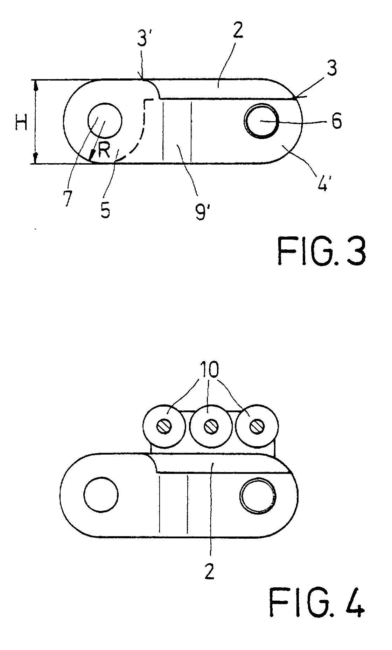

Wie aus den Fig.2 und 3 zu erkennen ist, befindet sich an der Unterseite jeder Tragplatte 2 an der den Ausschnitt 11 aufweisenden Seite 3 ein Gelenkaugenpaar, wobei ein Gelenkauge 4 an einer Seite und das zweite 4' an der gegenüberliegenden Seite des Ausschnitts 11 angeordnet ist. Beide Gelenkaugen 4,4' werden vom Bolzen 6 durchgriffen und halten diesen verdrehfest. Die Außenbreite A des Gelenkaugenpaares 4,4' beträgt annähernd 57mm, während die Breite C bzw C' eines einzelnen Gelenkauges 4 bzw 4' ca.10mm und die Breite B des zentralen Gelenkauges 5 ca.35mm beträgt, d.h. das Verhältnis aus der Summe von C und C' zu B im Bereich von annähernd 0,55 liegt.

Von den beiden Gelenkaugen 4,4' führt jeweils ein stufenförmiger Steg 9,9' zum zentralen Gelenkauge 5, wobei die Tragplatte 2, die Gelenkaugen 4,4',5 und die Stege 9,9' als ein einteiliges Bauteil ausgeführt und im Spritzgussverfahren herstellbar sind. Die Stege 9,9' erfüllen die Funktion von Zugankern, die einen Großteil der Zugkraft von einem Gelenkauge 4,4' zum gegenüberliegenden Gelenkauge 5 übertragen, während ein Teil der Kraftübertragung auch über die Tragplatte 2 erfolgt. Die Gesamtbreite beider Stege 9,9' beträgt zusammengenommen gut ein Fünftel und die Höhe H bis zur Oberseite der Tragplatte 2 ein Drittel der Gelenkbreite A. Bei Verwendung eines verschleißfesten Kunststoffes, wie z.B. Polyazetal, können mit dieser Konstruktion ohne weiteres zulässige Betriebskräfte von über 3800N erreicht werden.

Zwischen den beiden Stegen 9,9' besitzt das Gelenkauge 5 einen kreisrunden Oberflächenabschnitt mit einem Krümmungsradius R von annähernd 10 mm und einer Breite E, die etwa 23 mm und damit mehr als ein Drittel der Gesamtbreite A beträgt. Dieser Oberflächenabschnitt dient als Eingriffsbereich für ein zum Antreiben der Scharnierbandkette dienendes Antriebskettenrad. Auf Grund der gewählten Maßverhältnisse wird auch in diesem Bereich eine zu hohe Oberflächenpressung zwischen dem Gelenkauge 5 und dem nicht dargestellten Antriebskettenrad vermieden.

Die Fig. 4 zeigt eine Abwandlung der in Fig.3 dargestellten Scharnierbandkette. Bei dieser Ausführung befinden sich oberhalb der Tragplatte 2 frei drehbar gelagerte Röllchen 10, die einen reibungs- und staudruckarmen Transport von empfindlichem Stückgut, wie z.B. folienumhüllte Trays, ermöglichen.

## Patentansprüche

1. Scharnierbandkette (1) in geradelaufender Ausführung bestehend aus Kunststoffgliedern, die eine biegesteife Tragplatte (2) mit einer im wesentlichen rechteckigen Oberflächenkontur und ein Gelenkaugenpaar (4,4') an einer Seite (3) und ein mittig zu den beabstandeten Gelenkaugen (4,4') an der gegenüberliegenden Seite (3) der gleichen Tragplatte (2) angeordnetes Gelenkauge (5) aufweisen, sowie aus einem Gelenkbolzen (6), der eine zylindrische Bohrung (7) des Gelenkauges (5) einer Tragplatte (2) und die des Gelenkaugenpaares (4,4') einer benachbarten Tragplatte (2) derart durchgreift, dass die benachbarten Tragplatten um den gemeinsamen, in der Förderebene liegenden Gelenkbolzen (6) schwenkbar verbunden sind, wobei die Gesamtbreite (A) eines Scharniergelenks im Bereich zwischen 55 bis 60 mm liegt und die mit dem Gelenkbolzen (6) in Eingriff stehende Zylinderfläche der Bohrung (7)im mittigen Gelenkauge (5) das 17 bis 20-fache der Kreisquerschnittsfläche des Gelenkbolzens (6) beträgt, dessen Durchmesser im Bereich zwischen 7 und 9 mm liegt.

2. Scharnierbandkette nach Anspruch 1, **dadurch gekennzeichnet, dass** das Verhältnis der Zylinderfläche der Bohrung (7) zur Kreisquerschnittsfläche des Gelenkbolzens (6) annähernd 17,5 beträgt.

3. Scharnierbandkette nach Anspruch 1 oder 2, **dadurch gekennzeichnet, dass** das Verhältnis aus der Gesamtbreite (C+C') des Gelenkaugenpaares (4,4') zu der Breite (B) des mittigen Gelenkauges (5) annähernd 0,55 beträgt.

4. Scharnierbandkette nach einem der vorhergehenden Ansprüche 1 bis 3, **dadurch gekennzeichnet, dass** die mit einem Antriebsrad formschlüssig in Eingriff bringbare Außenfläche des mittigen Gelenkauges (5) einen Krümmungsradius (R) von annähernd 10mm aufweist.

5. Scharnierbandkette nach wenigstens einem der vorhergehenden Ansprüche 1 bis 4, **dadurch gekennzeichnet, dass** die Breite (E) der mit einem Antriebsrad formschlüssig in Eingriff bringbaren Außenfläche des mittigen Gelenkauges (5) mehr als ein Drittel der Gesamtbreite (A) eines Scharniergelenks ,vorzugsweise 23mm beträgt.

6. Scharnierbandkette nach wenigstens einem der vorhergehenden Ansprüche 1 bis 5, **dadurch gekennzeichnet, dass** das mittige Gelenkauge (5) durch jeweils einen stufenförmigen Steg (9') mit den an der gegenüberliegenden Seite (3,3') der gleichen Tragplatte (2) angeordneten Gelenkaugen (4,4') verbunden ist.

7. Scharnierbandkette nach wenigstens einem der vorhergehenden Ansprüche 1 bis 6, **dadurch gekennzeichnet, dass** die Tragplatte (2), die Gelenkaugen (4,4',5) und die Stege (9,9') einstückig ausgebildet sind.

8. Scharnierbandkette nach wenigstens einem der vorhergehenden Ansprüche 6 oder 7, **dadurch gekennzeichnet, dass** die Stege eine größere Höhe als Breite aufweisen.

9. Scharnierbandkette nach wenigstens einem der vorhergehenden Ansprüche 1 bis 8, **dadurch gekennzeichnet, dass** die Gesamtbreite des Gelenks annähernd 57 mm beträgt.

10. Scharnierbandkette nach wenigstens einem der vorhergehenden Ansprüche 1 bis 9, **dadurch gekennzeichnet, dass** das Verhältnis der längeren Seite (3,3') zur kürzeren Seite (8,8') einer Tragplatte (2) größer als 4,8 ist.

11. Scharnierbandkette nach wenigstens einem der vorhergehenden Ansprüche 1 bis 10, **dadurch gekennzeichnet, dass** der Durchmesser (D) des Gelenkbolzens (6) 8mm beträgt.

12. Scharnierbandkette nach wenigstens einem der vorhergehenden Ansprüche 1 bis 11, **dadurch gekennzeichnet, dass** auf der Tragfläche (2) frei drehbar gelagerte Röllchen (10) angeordnet sind.

## Claims

1. A flat-top chain (1) of straight-running design, consisting of plastics links which comprise a deflection-resistant supporting plate (2) with a substantially rectangular surface contour and a pair of hinge loops (4, 4') on one side (3), and a hinge loop (5) which is on the opposite side (3) of the same supporting plate (2) and which is disposed centrally in relation to the spaced-apart hinge loops (4, 4'), and also consisting of a hinge pin (6) which fits through a cylindrical bore (7) in the hinge loop (5) of a supporting plate (2) and which passes through the cylindrical bores of the pair of hinge loops (4, 4') of an adjacent supporting plate (2) in such a way that the adjacent supporting plates are connected so that they can swivel about the common hinge pins (6) situated in the plane of conveying, wherein the total width (A) of a hinge joint falls within the range between 55 to 60 mm, and the cylindrical area of the bore (7) in the central hinge loop (5) which is engagement with the hinge pin (6) is 17 to 20 times the circular cross-sectional area of the hinge pin (6), the diameter of which falls within the range between 7 and 9 mm.

2. A flat-top chain according to claim 1, **characterised in that** the ratio of the cylindrical area of the bore (7) to the circular cross-sectional area of the hinge pin (6) is approximately 17.5.

3. A flat-top chain according to claims 1 or 2, **characterised in that** the ratio of the total width (C+C') of the pair of hinge loops (4, 4') to the width (B) of the central hinge loop (5) is approximately 0.55.

4. A flat-top chain according to any one of the preceding claims 1 to 3, **characterised in that** the outer face of the central hinge loop (5), which can be brought into positive engagement with a driving wheel, has a radius of curvature (R) of approximately 10 mm.

5. A flat-top chain according to at least one of the preceding claims 1 to 4, **characterised in that** the width (E) of the outer face of the central hinge loop (5) which can be brought into positive engagement with a driving wheel is more than one third of the total width (A) of a hinge joint, and is preferably 23 mm.

6. A flat-top chain according to at least one of the preceding claims 1 to 5, **characterised in that** the central hinge loop (5) is connected by a step-shaped stay (9') to the hinge loops (4, 4') which are disposed on the opposite side (3, 3') of the same supporting plate (2).

7. A flat-top chain according to at least one of the preceding claims 1 to 6, **characterised in that** the supporting plate (2), the hinge loops (4, 4', 5) and the stays (9, 9') are constructed as one piece.

8. A flat-top chain according to at least one of the preceding claims 6 or 7, **characterised in that** the height of the stays is greater than their width.

9. A flat-top chain according to at least one of the preceding claims 1 to 8, **characterised in that** the total width of the joint is approximately 57 mm.

10. A flat-top chain according to at least one of the preceding claims 1 to 9, **characterised in that** the ratio of the longer side (3, 3') to the shorter side (8, 8') of a supporting plate (2) is greater than 4.8.

11. A flat-top chain according to at least one of the preceding claims 1 to 10, **characterised in that** the diameter (D) of the hinge pin (6) is 8 mm.

12. A flat-top chain according to at least one of the preceding claims 1 to 11, **characterised in that** rollers (10), which are mounted so that they can rotate freely, are disposed on the supporting area (2).

## Revendications

1. Convoyeur à charnières (1) du type rectiligne, composé d'éléments en plastique, comportant une plaque support (2) résistante à la flexion présentant un contour essentiellement rectangulaire et une paire d'oeillards articulés (4, 4') sur l'un de ses côtés (3), ainsi qu'un oeillard articulé (5) disposé centralement entre les oeillards articulés distants (4, 4'), du côté opposé (3') de la même plaque (2), et composé d'autre part d'un boulon d'articulation (6) qui traverse un perçage cylindrique (7) de l'oeillard articulé (5) d'une plaque support (2) et les perçages de la paire d'oeillards articulés (4,4') d'une plaque voisine (2), de sorte que les plaques supports voisines sont reliées d'une façon articulée autour du boulon commun (6) situé sur le plan de transport, la largeur totale (A) d'une charnière étant comprise entre 55 et 60 mm, et la surface cylindrique du perçage (7) en contact avec le boulon (6) dans l'oeillard médian (5) étant de 17 à 20 fois la surface de la section circulaire du boulon (6), dont le diamètre est compris entre 7 et 9 mm.

2. Convoyeur à charnières selon la revendication 1,
**caractérisé en ce que**
le rapport entre la surface cylindrique du perçage (7) par rapport à la surface de la section circulaire du boulon articulé (6) est d'environ 17,5.

3. Convoyeur à charnières selon la revendication 1 ou 2,
**caractérisé en ce que**
le rapport de la largeur totale (C+C') de la paire d'oeillards articulés (4, 4') sur la largeur (B) de l'oeillard articulé médian (5) est d'environ 0,55.

4. Convoyeur à charnières selon l'une quelconque des revendications précédentes,
**caractérisé en ce que**
la surface extérieure de l'oeillard articulé (5) pouvant venir en prise par liaison de forme avec une roue d'entminement présente un rayon de courbure (R) d'environ 10 mm.

5. Convoyeur à chanteres selon au moins l'une des revendications 1 à 4,
**caractérisé en ce que**
la largeur (E) de la surface extèrieure de l'oeillard articulé (5) pouvant venir en prise par liaison de forme avec une roue d'entraînement se monte à plus du tiers de la largeur totale (A) d'une charnière, et, de préférence, est de 23 mm.

6. Convoyeur à charnières selon au moins l'une des revendications 1 à 5,
**caractérisé en ce que**
l'oeillard articulé (5) médian est relié chaque fois par une nervure étagée (9, 9') aux oeillards articulés (4, 4') disposés sur les côtés opposés (3, 3') de la même plaque support (2).

7. Convoyeur à charnières selon au moins l'une des revendications 1 à 6,
**caractérisé en ce que**
la plaque support (2), les oeillards articulés (4, 4', 5) et les nervures (9, 9') constituent une seule pièce.

8. Convoyeur à charnières selon l'une des revendications 6 ou 7,
**caractérisé en ce que**
la hauteur des nervures est supérieure à leur largeur.

9. Convoyeur à charnières selon au moins l'une des revendications 1 à 8,
**caractérisé en ce que**
la largeur totale de la charnière est d'environ 57 mm.

10. Convoyeur à charnières selon au moins l'une des revendications 1 à 9,
**caractérisé en ce que**
le rapport entre la longueur du plus grand, côté (3, 3') et celle du petit côté (8, 8') d'une plaque support (2) est supérieur à 4,8.

11. Convoyeur à charnières selon au moins l'une des revendications 1 à 10,
**caractérisé en ce que**
le diamètre (D) du boulon articulé (6) est de 8 mm.

12. Convoyeur à charnières selon au moins l'une des revendications 1 à 11,
**caractérisé en ce que**
sur la surface support (2), sont placés des petits rouleaux (10) pouvant tourner librement.
